# EUROPEAN PATENT APPLICATION

(11) **EP 4 582 649 A1**
(43) Date of publication of application: **09.07.2025**
(21) Application number: 24216557.9
(22) Date of filing: 29.11.2024
(51) Int. Cl.: E04D 13/10, E04D 13/12, E04G 21/32, F24S 25/61, H02S 20/23

(54) **FASTENING PLATE FOR FASTENING ROOF EQUIPMENT AT A ROOF SURFACE**

(30) Priority: 02.01.2024 SE 2450001; 02.01.2024 SE 2450003; 02.01.2024 SE 2450002
(71) Applicant: CWL Patent AB, 792 22 Mora (SE)
(72) Inventor: FRÖDERBERG, Andreas, 792 33 Mora (SE); LUNDBERG, Bengt, 792 51 Mora (SE)
(74) Representative: Ehrner & Delmar Patentbyrå AB

(57) **Abstract**

The invention relates to a fastening plate (100) comprising: at least one first attachment means (102) for attaching an underside (110) of the fastening plate (100) to a roof surface (310) in operation; at least one second attachment means (104) for attaching a roof equipment (210) to an upper side (112) of the fastening plate (100) in operation; and at least one strengthening recess (140) enclosing the second attachment means (104) in a circle. Furthermore, the invention also relates to a method for producing such a fastening plate (100).

## Description

### Technical Field

The invention relates to a fastening plate for fastening roof equipment at a roof surface. Furthermore, the invention also relates to a method for producing such a fastening plate.

### Background

Different fastening plates for fastening/attaching roof equipment to a roof surface are provided on the market.

Such fastening plates may comprise one or more fastening means for fastening roof equipment to a roof via the fastening plate. Examples of roof equipment are ladders, snow fences, safety equipment and solar panels.

### Summary

An objective of embodiments of the invention is to provide a solution which mitigates or solves the drawbacks and problems of conventional solutions.

Another objective of embodiments of the invention is to provide a stiff fastening plate for attaching roof equipment to a roof.

The above and further objectives are solved by the subject matter of the independent claims. Further advantageous embodiments of the invention can be found in the dependent claims.

According to a first aspect of the invention, the above mentioned and other objectives are achieved with a fastening plate comprising:
at least one first attachment means for attaching an underside of the fastening plate to a roof surface in operation;
at least one second attachment means for attaching a roof equipment to an upper side of the fastening plate in operation; and
at least one strengthening recess enclosing the second attachment means in a circle.

The expression "in operation" herein may be understood as how the parts of the fastening plate are arranged and/or located in relation to each other when mounted in use on or at the roof surface. The fastening plate may also be denoted a fastening bracket or bracket.

The roof surface herein may be understood as a surface which is part of a roof construction or structure supporting a roof. The roof surface may be horizontal, vertical or sloped depending on the roof construction and extending in a plane. The roof surface may be covered with a layer or sealant membrane protecting the roof construction from different weather conditions. The layer or membrane may also have suitable properties for providing suitable walkway surface. The layer or membrane may e.g., be made of, or being covered with PVC, ECB, FPO or bitumen for providing a waterproof sealing.

The fastening plate according to the first aspect provides a stiffer fastening plate compared to conventional solutions. Thereby, the present fastening plate can be made lighter since the fastening plate may be produced from thinner sheet metal. Furthermore, the effects of unwanted condensation can be mitigated since the circular strengthening recess makes it possible for moisture formed on the upper side of the fastening plate to evaporate more easily.

In an embodiment of a fastening plate according to the first aspect, the strengthening recess encloses the second attachment means in a discrete circle or a continuous circle.

In an embodiment of a fastening plate according to the first aspect, the strengthening recess is arranged in the downwards direction of the fastening plate.

In an embodiment of a fastening plate according to the first aspect, the fastening plate comprises a flat main section extending in a plane, and the strengthening recess is formed as a depression in the main section.

In an embodiment of a fastening plate according to the first aspect, the main section has a rectangular or a quadratic shape with four sides.

In an embodiment of a fastening plate according to the first aspect, the second attachment means forms a centre point for the circle.

In an embodiment of a fastening plate according to the first aspect, the second attachment means is arranged at the centre of the fastening plate.

In an embodiment of a fastening plate according to the first aspect, the fastening plate comprises at least two strengthening recesses enclosing the second attachment means, wherein a first strengthening recesses has a first radius and a second strengthening recesses has a second radius different to the first radius.

In an embodiment of a fastening plate according to the first aspect, the fastening plate comprises a plurality of through holes, each through hole being delimited by a collar.

Thereby, a stiffer fastening plate is provided.

In an embodiment of a fastening plate according to the first aspect, the collar extends downwards from the underside.

Thereby, the fastening plate is more securely attached at the roof surface.

In an embodiment of a fastening plate according to the first aspect, the plurality of through holes enclose the second attachment means.

In an embodiment of a fastening plate according to the first aspect, at least one strengthening recess extends between at least two through holes on the fastening plate.

In an embodiment of a fastening plate according to the first aspect, at least one section of an outer edge of the fastening plate comprises a bending having an end part extending beneath the underside of the fastening plate.

Thereby, a stiffer fastening plate is provided.

In an embodiment of a fastening plate according to the first aspect, the outer edge is arranged at a circumference of the fastening plate.

In an embodiment of a fastening plate according to the first aspect, the fastening plate is fully or partially supported by the bending on the roof surface in operation.

In an embodiment of a fastening plate according to the first aspect, the end part of the bending extends in parallel with the underside of the fastening plate or is directed towards the underside of the fastening plate.

In an embodiment of a fastening plate according to the first aspect, the end part of the bending is in mechanical contact with the underside of the fastening plate.

In an embodiment of a fastening plate according to the first aspect, the fastening plate has a quadratic or a rectangular shape having four sides, and wherein at least two sides comprise a bending.

In an embodiment of a fastening plate according to the first aspect,
the at least two sides are arranged at opposite sides of the fastening plate, or
all four sides comprise a bending.

In an embodiment of a fastening plate according to the first aspect, the fastening plate comprise at least one depressed section arranged downwards in a main section, wherein the at least one depressed section surrounds the at least one first attachment means.

In an embodiment of a fastening plate according to the first aspect, a height of the depressed section is dependent on a height of the bending.

In an embodiment of a fastening plate according to the first aspect, the fastening plate comprises a plurality of first attachment means, each first attachment means being arranged at corners of the fastening plate.

In an embodiment of a fastening plate according to the first aspect, the fastening plate comprises
at least one strengthening recess extending between at least two through holes on the fastening plate, and/or
at least one strengthening recess extending between two bendings on the fastening plate.

In an embodiment of a fastening plate according to the first aspect, a height from an underside of the end part to the upper side of the fastening plate is between 3-2 times a thickness of a sheet metal from which the fastening plate is produced.

In an embodiment of a fastening plate according to the first aspect, the fastening plate is produced from a sheet metal having a thickness that is less than or equal to 4 mm, or less than or equal to 3 mm, or less than or equal to 2 mm, or less than or equal to 1.5 mm.

According to a second aspect of the invention, the above mentioned and other objectives are achieved with a method for producing a fastening plate, the method comprising:
punching a sheet metal to form a fastening plate with at least one first attachment means for attaching an underside of the fastening plate to a roof surface;
punching the fastening plate to form at least one second attachment means for attaching a roof equipment to an upper side of the fastening plate; and
punching the fastening plate to form at least one strengthening recess enclosing the second attachment means in a circle.

The method according to the second aspect can be extended into embodiments corresponding to the embodiments of the fastening plate according to the first aspect. Hence, an embodiment of the method comprises the feature(s) of the corresponding embodiment form of the fastening plate.

The advantages of the methods according to the second aspect are the same as those for the corresponding embodiments of the fastening plate according to the first aspect.

Further applications and advantages of the embodiments of the invention will be apparent from the following detailed description.

### Brief Description of the Drawings

The appended drawings are intended to clarify and explain different embodiments of the invention, in which:
- Fig. 1a shows a fastening plate in a perspective view and Fig. 1 b shows the fastening plate in a view from above according to embodiments of the invention;
- Fig. 2a and 2b show a fastening plate in a view from above with a plurality of through holes and having one or two circular strengthening recesses according to embodiments of the invention;
- Fig. 3a and 3b show a fastening plate in a view from above with a plurality of through holes and having circular and straight strengthening recesses according to embodiments of the invention;
- Fig. 4 shows a strengthening recess in a cross-sectional side view according to embodiments of the invention;
- Figs. 5a - 5c show fastening plates in a side view with different types of bendings according to embodiments of the invention;
- Fig. 6a and 6b show fastening plates in a view from above with bendings and strengthening recesses according to embodiments of the invention;
- Fig. 7a shows a fastening plate in a view from above with a plurality of through holes and straight strengthening recesses according to embodiments of the invention, while Fig. 7b shows a section of the through holes in Fig. 7a, and Fig. 7c shows a through hole with its collar in a cross-sectional side view;
- Fig. 8 shows a flow chart for producing a fastening plate according to embodiments of the invention; and
- Fig. 9 illustrates a house with a roof surface, a fastening plate and a roof equipment.

### Detailed Description

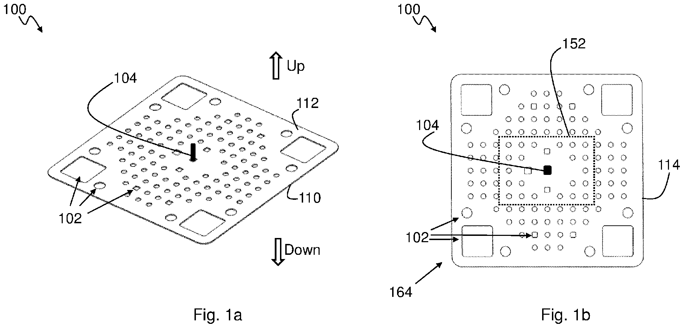

Fig. 1a shows a fastening plate 100 in a perspective view and Fig. 1 b shows the fastening plate 100 in a view from above according to embodiments of the invention.

The fastening plate 100 herein disclosed comprises at least one first attachment means 102 for attaching an underside 110 of the fastening plate 100 to a roof surface 310 in operation/use. The first attachment means 102 may be any suitable attachment means known in the art. For example, the first attachment means 102 may comprises through holes in which an adhesive is applied such that a sealant membrane covering the roof surface 310 is attached to a top membrane covering the fastening plate 100 when mounted on the roof surface 310. The sealant membrane may e.g., be produced from PVC, ECB, FPO or bitumen. Also, other types of first attachment means 102 may be used, such as bolts and screws, for attaching the underside 110 of the fastening plate 100 to the roof surface 310. As also shown in Fig. 1a and 1b, one first attachment means 102 may be arranged at each corner 164 of the fastening plate 100. The corner 164 is the area of the fastening plate 100 where two sides of the fastening plate 100 meet each other.

The fastening plate 100 further comprises at least one second attachment means 104 for attaching a roof equipment 210 to an upper side 112 of the fastening plate 100 in operation/use. The second attachment means 104 may be any suitable attachment means known in the art. For example, one or more pins, bolts or screws extending in the upwards direction from the fastening plate 100 may be used as second attachment means 104. The pin, bolt or screw may attach and connect the roof equipment 210 to the fastening plate 100 and hence also to the roof surface 310. In Fig. 1a and 1b one such bolt is shown.

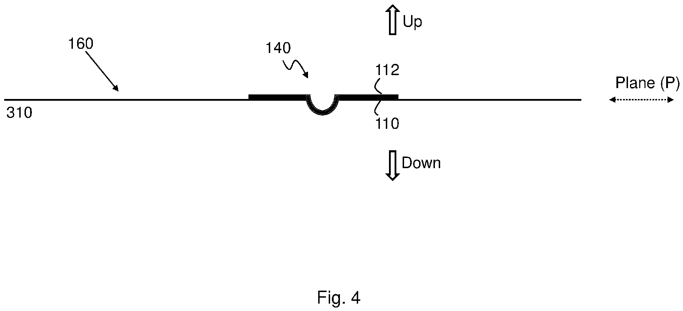

As may further be noted from Fig. 1, the second attachment means 104 may be arranged at a centre section 152 of the fastening plate 100 which means that the attachment of the roof equipment 210 is centred at the fasting plate 100. Further, the underside 110 of the fastening plate 100 is arranged opposite to the upper side 112 of the fastening plate 100 in operation when the fastening plate 100 is mounted at the roof surface 310. Arrows "Up" and "Down" in the Figs. illustrates the upwards direction and the downwards direction, respectively, of the fastening plate 100. As may be derived from the labelling, the herein disclosed fastening plate 100 is a plate being flat and thus the height and width of the underside 110 and the upper side 112 is much larger than the thickness of the fastening plate 100. Thus, the fastening plate 100 may comprises a flat main section 160 extending in a plane P, see Fig. 4 regarding the plane P.

In embodiments of the invention, the fastening plate 100 comprises at least one strengthening recess 140 enclosing the second attachment means 104 in a circle.

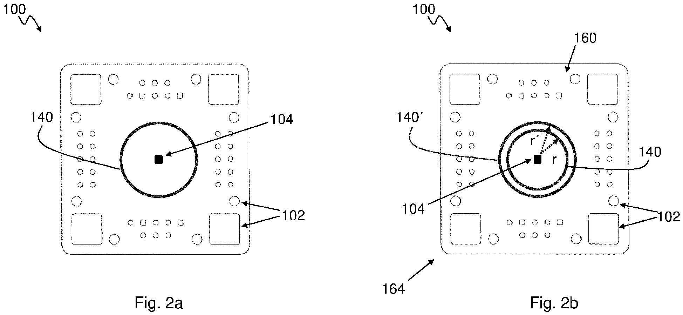

Fig. 2a and 2b show a fastening plate 100 in a view from above with a plurality of through holes 130 and also having one or two circular strengthening recesses 140 according to embodiments of the invention.

The fastening plate 100 in Fig. 2a has one circular strengthening recess 140 which encloses the second attachment means 104. The circular strengthening recess 140 thus encloses the second attachment means 104 in a continuous circle. This also implies that the second attachment means 104 may form a centre point for the circular strengthening recess 140. Thus, the centre point defines the centre of the circle.

In Fig. 2b the fastening plate 100 has two circular strengthening recesses 140 with different radii in relation to the second attachment means 104. Thus, a first circular strengthening recess 140 is enclosed by a second circular strengthening recess 140'. This means that the fastening plate 100 in embodiments of the invention comprises at least two strengthening recesses 140, 140' enclosing the second attachment means 104. The first strengthening recesses 140 has a first radius r and the second strengthening recesses 140' has a second radius r' different to the first radius r.

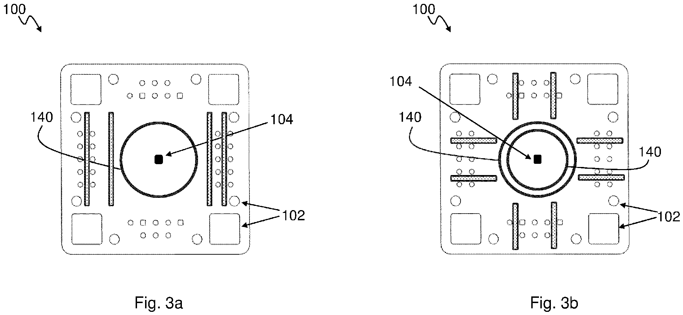

Fig. 3a and 3b show a fastening plate 100 in a view from above with a plurality of through holes 130 and also having circular and straight strengthening recesses 140 according to embodiments of the invention. Hence, Fig. 3a and 3b illustrate different combinations of through holes 130 and strengthening recesses 140 according to embodiments of the invention for stiffer fastening plates 100.

In Fig. 3a, the fastening plate 100 comprises one circular strengthening recess 140 which is enclosed by a plurality of through holes 130. Further, straight strengthening recesses 140 extends on two opposite sides of the fastening plate 100 in parallel with each other and equidistantly in relation to the second attachment means 104 and the circular strengthening recess 140.

In Fig. 3b, the fastening plate 100 on the other hand comprises two circular strengthening recesses 140 enclosing the second attachment means 104. Further, a plurality of straight strengthening recesses 140 extends on all four sides of the fastening plate 100 from the centre of the fastening plate 100 towards the outer edges of the fastening plate 100 in a sun pattern. The straight strengthening recesses 140 may extend between the plurality of through holes 130 for stiffer fastening plates 100.

Fig. 4 shows a strengthening recess 140 in a cross-sectional side view according to embodiments of the invention. The herein disclosed strengthening recesses 140 is arranged in the downwards direction of the fastening plate 100. The strengthening recess 140 may be formed by a punching operation on sheet metal.

According to embodiments of the invention, at least one section of an outer edge 114 of the fastening plate 100 comprises a bending 120 having an end part 122 extending beneath the underside 110 of the fastening plate 100. The bending 120 may have a radius part 124 which connects the end part 122 to the other parts of the fastening plate 100 as shown in the Figs. The bending 120 may be formed in a bending/folding operation of a bending machine thus also defining the radius of the radius part 124 depending on the applied bending/folding operation. The bending 120 may also be denoted a folding 120.

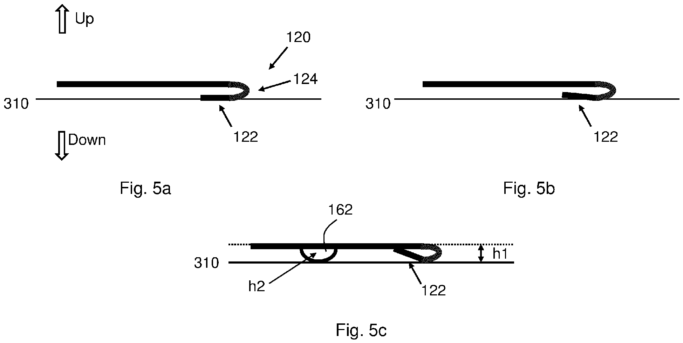

Figs. 5a - 5c show fastening plates 100 in a side view with different types of bendings 120 according to embodiments of the invention.

In embodiments of the invention, the outer edge 114 of the fastening plate 100 is arranged at a circumference 150 of the fastening plate 100 which defines and delimits the outer edges of the fastening plate 100. Hence, the fastening plate 100 may be supported by the bending(s) 120 on the roof surface 310 when mounted and in operation. Thereby, a space will be formed between the underside 110 of the fastening plate 100 and the roof surface 310 which may be filled with air. Thus, the effects of unwanted condensation can be mitigated since the space makes it possible for moisture formed under the fastening plate 100 to evaporate more easily.

The bending 120 may form different angles in relation to the underside 110 of the fastening plate 100 according to embodiment of the invention. For example, the end part 122 of the bending 120 may extend substantially parallel with the underside 110 of the fastening plate 100 as shown in Fig. 5a or being more or less directed towards the underside 110 of the fastening plate 100 in an angle as shown in Fig. 5b and 5c. In Fig. 5c the end part 122 of the bending 120 is in mechanical contact with the underside 110 of the fastening plate 100 implying a sharper angle of the bending 120 in relation to the underside 110. The mechanical contact may be due to the fact that the tip of the end part 122 is in contact with the underside 110 of the fastening plate 100. This provides an even more robust fastening plate 100.

It may further be noted from the Figs. that a height h1 from an underside of the end part 122 to the upper side 112 of the fastening plate 100 may be between 3 - 2 times a thickness of a sheet metal from which the fastening plate 100 is produced. The height h1 is illustrated in Fig. 5c. The underside of the end part 122 may thus be considered as the part which is in contact with and supported by the roof surface 310 when the fastening plate 100 is mounted on the roof surface 310. The height of the previously mentioned space formed between the underside 110 and the roof surface 310 is defined by height h1.

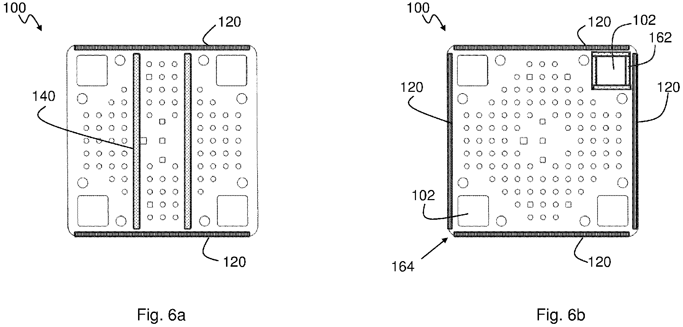

Fig. 6a and 6b show fastening plates 100 in a view from above with bendings 120 and strengthening recesses 140 according to embodiments of the invention.

The fastening plate 100 may have different general shapes and in embodiments of the invention, the fastening plate 100 is quadratic or rectangular having four sides 116 forming the outer edge of the fastening plate 100. In such cases at least two sides 116 may comprise a bending 120 as shown in Fig. 6a. In examples, the two sides 116 may be arranged at opposite sides of the fastening plate 100. The fastening plate 100 may also comprise strengthening recesses 140 together with bendings 120. In the particular example in Fig. 6a, the strengthening recesses 140 extends between the bendings 120 over the fastening plate 100 for improved stiffness.

In other examples, all four sides 116 of the fastening plate 100 may comprise a bending 120 as shown in Fig. 6b. Each bending 120 may extend along the outer edge of the fastening plate 100. As noted from the Figs. each bending 120 may extend continuous along the outer edge of the fastening plate 100 except at the corners of the fastening plate 100 formed by rounded corner sections. It should however be noted that the bending 120 may in embodiments of the invention extend non-continuous or discrete along the outer edge of the fastening plate 100 and thus be formed by two or more non-continuous sub-bendings which however are not shown in the Figs. Thus, each side of the fastening plate 100 may comprise two or more non-continuous sub-bendings arranged at the outer edge of the fastening plate 100. Thus, the fastening plate 100 may be supported on the roof surface 310 by non-continuous sub-bendings in embodiments of the invention.

In embodiments of the invention, the fastening plate 100 as previously mentioned comprises a flat main section 160 extending in a plane P. The fastening plate 100 may further comprise at least one depressed section 162 arranged downwards in the main section 160. The at least one depressed section 162 surrounds the at least one first attachment means 102. In such cases, a height h2 of the depressed section 162 is dependent on a height h1 of the bending 120, or vice versa. The height h2 of the depressed section 162 is illustrated in Fig. 5c. Heights h1 and h2 may be dimensioned such that the fastening plate 100 when mounted is arranged in parallel with the roof surface 310 and supported by the bendings 120 and the depressed sections 162 for stable mounting. Thus, the plane P may be substantially parallel with the extension plane of the roof surface 310.

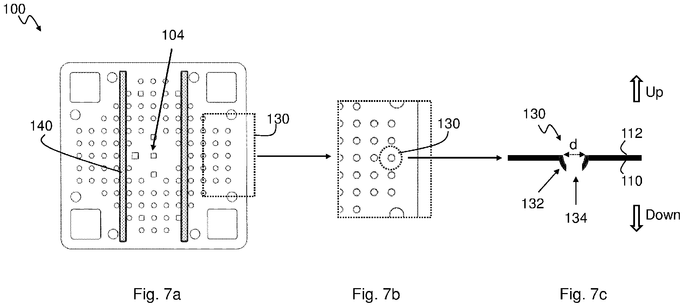

Fig. 7a shows a fastening plate 100 in a view from above with a plurality of through holes 130 and straight strengthening recesses 140 according to embodiments of the invention, Fig. 7b shows a section of the through holes 130 in Fig. 7a, and Fig. 7c shows a through hole 130 with its collar 132 in a cross-sectional side view.

Hence, in embodiments of the invention, the fastening plate 100 comprises a plurality of through holes 130, and each through hole 130 is delimited or defined by a collar 132. The collar 132 extends downwards from the underside 110. Thereby, the collar 132 may grip into the roof surface 310 when the fastening plate 100 is mounted on the roof 300. The collar 132 may extend completely around the through hole 130.

The plurality of through holes 130 may enclose the second attachment means 104 as shown in the Figs. Generally, the plurality of through holes 130 may be arranged in a circular pattern, a rectangular pattern or a quadratic pattern on the fastening plate 100 around and enclosing the second attachment means 104. Thereby, the plurality of through holes 130 may be arranged on the fastening plate 100 with different radii in relation to the second attachment means 104 to form a stiffer fastening plate 100.

Fig. 7c also shows that the collar 132 may extend downwards from the underside 110 of the fastening plate 100. The collar 132 may extend downwards with an amount that may be dependent on or based on the diameter d of the through hole 130. This implies that the collar 132 may be formed in a punching operating when the fastening plate 100 is produced.

Moreover, the present fastening plate 100 may be produced from a single sheet metal punched/formed in different shapes. In other words, the fastening plate 100 may be formed in a single piece of sheet metal. The single piece of sheet metal may have a constant thickness in embodiments of the invention. Thus, the fastening plate 100 may be produced from a sheet metal having a thickness that is less than or equal to 4 mm, or less than or equal to 3.0 mm, or less than or equal to 2.0 mm, or less than or equal to 1.5 mm, or less than or equal to 1.0 mm.

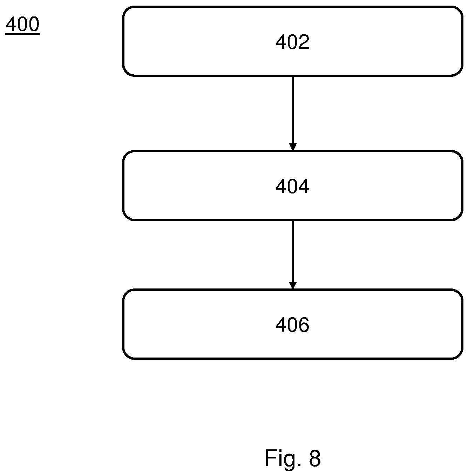

Fig. 8 shows a flow chart for producing a fastening plate 100 according to embodiments of the invention. The method 400 for producing the fastening plate 100 comprises the steps of: punching 402 a sheet metal to form a fastening plate 100 with at least one first attachment means 102 for attaching an underside 110 of the fastening plate 100 to a roof surface 310; punching 404 the fastening plate 100 to form at least one second attachment means 104 for attaching a roof equipment 210 to an upper side 112 of the fastening plate 100; and punching 406 the fastening plate 100 to form at least one strengthening recess 140 enclosing the second attachment means 104 in a circle.

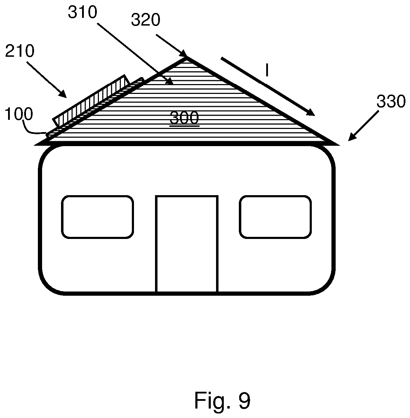

Fig. 9 illustrates a house 300 having a roof surface 310 of a roof with a slope/inclination I or a pitch with a certain sloping angle or pitching angle. However, the roof surface 310 may also be horizontally or vertically arranged which is not disclosed in the Fig. The roof surface 310 may e.g., comprise of a sealant membrane covering a roof structure. The roof structure may include battens and beams arranged suitably between the ridge 320 and the eaves 330. The sealant membrane may e.g., be produced from PVC, ECB, FPO or bitumen.

Embodiments of the invention also relates to an arrangement comprising at least one fastening plate 100 according to embodiments of the invention and at least one roof equipment 210 as also shown in Fig. 9. By coupling any number of fastening plates 100 to one or more roof equipment 210 any type of roof system can be formed. Nonlimiting examples of roof equipment are walkways, roof ladders, solar panels, ridge and roof rails, hatches, guardrails, snow stoppers, roof steps, fall protection devices, etc.

Finally, it should be understood that the invention is not limited to the embodiments described above, but also relates to and incorporates all embodiments within the scope of the appended independent claims.

## Claims

1. A fastening plate (100) comprising:
at least one first attachment means (102) for attaching an underside (110) of the fastening plate (100) to a roof surface (310) in operation;
at least one second attachment means (104) for attaching a roof equipment (210) to an upper side (112) of the fastening plate (100) in operation; and
at least one strengthening recess (140) enclosing the second attachment means (104) in a circle.

2. The fastening plate (100) according to claim 1, wherein strengthening recess (140) encloses the second attachment means (104) in a discrete circle or in a continuous circle.

3. The fastening plate (100) according to claim 1 or 2, wherein the strengthening recess (140) is arranged in the downwards direction of the fastening plate (100).

4. The fastening plate (100) according to claim 3, wherein the fastening plate (100) comprises a flat main section (160) extending in a plane (P), and the strengthening recess (140) is formed as a depression in the main section (160).

5. The fastening plate (100) according to claim 4, wherein the main section (160) has a rectangular or a quadratic shape with four sides (116).

6. The fastening plate (100) according to any one of the preceding claims, wherein the second attachment means (104) forms a centre point for the circle.

7. The fastening plate (100) according to any one of the preceding claims, wherein the second attachment means (104) is arranged at the centre of the fastening plate (100).

8. The fastening plate (100) according to any one of the preceding claims, comprising at least two strengthening recesses (140, 140') enclosing the second attachment means (104), wherein a first strengthening recesses (140) has a first radius (r) and a second strengthening recesses (140') has a second radius (r') different to the first radius (r).

9. The fastening plate (100) according to any one of the preceding claims, comprising a plurality of through holes (130), each through hole (130) being delimited by a collar (132).

10. The fastening plate (100) according to any one of the preceding claims, wherein at least one section of an outer edge (114) of the fastening plate (100) comprises a bending (120) having an end part (122) extending beneath the underside (110) of the fastening plate (100).

11. The fastening plate (100) according to claim 10, wherein the outer edge (114) is arranged at a circumference (150) of the fastening plate (100).

12. The fastening plate (100) according to claim 11, wherein the fastening plate (100) is partially or fully supported by the bending (120) on the roof surface (310) in operation.

13. The fastening plate (100) according to claim 11 or 12, wherein the end part (122) of the bending (120) extends in parallel with the underside (110) of the fastening plate (100) or is directed towards the underside (110) of the fastening plate (100).

14. The fastening plate (100) according to claim 13, wherein the end part (122) of the bending (120) is in mechanical contact with the underside (110) of the fastening plate (100).

15. A method (400) for producing a fastening plate (100), the method (400) comprising:
punching (402) a sheet metal to form a fastening plate (100) with at least one first attachment means (102) for attaching an underside (110) of the fastening plate (100) to a roof surface (310);
punching (404) the fastening plate (100) to form at least one second attachment means (104) for attaching a roof equipment (210) to an upper side (112) of the fastening plate (100); and
punching (406) the fastening plate (100) to form at least one strengthening recess (140) enclosing the second attachment means (104) in a circle.
